# EUROPÄISCHE PATENTSCHRIFT

(11) **EP 3 469 325 B1**
(45) Veröffentlichungstag und Bekanntmachung des Hinweises auf die Patenterteilung: **03.03.2021**
(21) Anmeldenummer: 17728850.3
(22) Anmeldetag: 09.06.2017
(51) Int. Cl.: G01L 5/22, B62D 6/10, G01L 3/10, H01F 7/02, G01D 5/14, G01D 5/244

(54) **MAGNETEINHEIT FÜR EINE SENSOREINRICHTUNG EINES KRAFTFAHRZEUGS, SENSOREINRICHTUNG MIT EINER MAGNETEINHEIT UND KRAFTFAHRZEUG MIT EINER SENSOREINRICHTUNG**
MAGNET UNIT FOR A SENSOR DEVICE OF A MOTOR VEHICLE, SENSOR DEVICE HAVING A MAGNET UNIT, AND MOTOR VEHICLE HAVING A SENSOR DEVICE
UNITÉ MAGNÉTIQUE POUR UN DISPOSITIF CAPTEUR D'UN VÉHICULE À MOTEUR, DISPOSITIF CAPTEUR POURVU D'UNE UNITÉ MAGNÉTIQUE ET VÉHICULE À MOTEUR POURVU D'UN DISPOSITIF CAPTEUR

(30) Priorität: 13.06.2016 DE 102016110774
(43) Veröffentlichungstag der Anmeldung: 17.04.2019
(73) Patentinhaber: Valeo Schalter und Sensoren GmbH, 74321 Bietigheim-Bissingen (DE)
(72) Erfinder: SMOLDERS, Griet, 74321 Bietigheim-Bissingen (DE); JEREMS, Frank, 74321 Bietigheim-Bissingen (DE); RACHUI, Dirk, 74321 Bietigheim-Bissingen (DE); FROEHLICH, Ekkehart, 74321 Bietigheim-Bissingen (DE)
(74) Vertreter: Pothmann, Karsten
(86) Internationale Anmeldenummer: PCT/EP2017/064097
(87) Internationale Veröffentlichungsnummer: WO 2017/216051

(56) Entgegenhaltungen:
- EP-A2- 1 123 794
- WO-A1-2017/120687
- DE-A1- 19 836 451
- DE-A1-102009 039 082
- DE-A1-102011 085 290

## Beschreibung

Die Erfindung betrifft eine Magneteinheit für eine Sensoreinrichtung zum Erfassen einer einen Rotationszustand einer Lenkwelle eines Kraftfahrzeugs charakterisierenden Messgröße, wobei die Magneteinheit eine Hülse zum Verbinden der Magneteinheit mit einem ersten Teil der Lenkwelle sowie ein mit der Hülse verbundenes Magnetelement mit einem magnetisch wirksamen Magnetabschnitt aufweist. Die Erfindung betrifft außerdem eine Sensoreinrichtung zum Erfassen einer einen Rotationszustand einer Lenkwelle eines Kraftfahrzeugs charakterisierenden Messgröße sowie ein Kraftfahrzeug mit einer solchen Sensoreinrichtung.

Gattungsgemäße Magneteinheiten werden beispielsweise in Drehmomentsensoreinrichtungen zur Erfassung eines auf eine Lenkwelle eines Kraftfahrzeugs aufgebrachten Drehmoments eingesetzt. Die Funktionsweise solcher Magneteinheiten ist grundsätzlich aus dem Stand der Technik bekannt, beispielsweise aus der EP0 1 269 133 B1.

Die Magneteinheit ist dabei üblicherweise dazu ausgebildet, an einem von zwei, sich in axialer Richtung gegenüberliegenden Teilen der Lenkwelle befestigt zu werden, wobei zur Erfassung des Rotationszustandes der Lenkwelle auf dem anderen Wellenteil eine Sensoreinheit befestigt werden kann mit einem magnetischen Stator, welcher dazu vorgesehen ist, in radialer Richtung gegenüber von dem Magnetelement der Magneteinheit mit einem kleinen Luftspalt dazwischen angeordnet zu werden. Mithilfe des Stators kann der im Magnetelement auftretende, vom Rotationszustand der Welle abhängige magnetische Fluss zur Erzeugung eines Sensorsignals vom Magnetelement über einen Flussleiter weiter an einen Magnetsensor geleitet werden, beispielsweise an einen Hall-Sensor.

Gattungsgemäße Magneteinheiten weisen üblicherweise ein als Permanentmagnet ausgebildetes, ringförmiges Magnetelement auf sowie in der Regel eine metallische Hülse, über welche die Magneteinheit mit der Lenkwelle verbunden werden kann, wobei bekannt ist, die Hülse beispielsweise mittels Kleben, Schweißen, Verstemmen oder mittels einer Presspassung drehfest mit der Lenkwelle zu verbinden.

Die Herausforderung besteht dabei einerseits darin, eine dauerhaft drehfeste Verbindung der Magneteinheit mit der Lenkwelle sicherzustellen, sowie andererseits eine möglichst spielfreie, drehfeste Verbindung zwischen dem Magnetelement und der Hülse bereitzustellen.

Das Magnetelement gattungsgemäßer Magneteinheiten besteht dabei üblicherweise aus einem mit Magnetpartikeln gefüllten Kunststoff und wird in der Regel im Kunststoffspritzgießverfahren hergestellt. Zum einen ist bekannt, das Magnetelement direkt an die Hülse anzuspritzen bzw. die Hülse mit dem Magnetmaterial zu umspritzen. Zum anderen ist bekannt, die Hülse und das Magnetelement zunächst separat herzustellen und anschließend miteinander zu verbinden, beispielsweise durch Kleben oder durch gemeinsames Umspritzen mit einem weiteren Kunststoff.

Aufgrund des in der Regel hohen Füllgrads mit den magnetischen Partikeln ist der Kunststoff, insbesondere bei tiefen Temperaturen, in der Regel relativ spröde bzw. wenig elastisch. Aufgrund der unterschiedlichen thermischen Ausdehnungskoeffizienten von Hülse und Magnetelement kann es daher, insbesondere wenn das Magnetelement direkt an die Hülse angespritzt wird bzw. wenn die Hülse mit dem Magnetmaterial umspritzt wird, beim Abkühlen der Kunststoffschmelze zu thermisch bedingten Schrumpfspannungen kommen, welche zur Bildung von Rissen im Magnetelement führen können.

Darüber hinaus kann es außerdem, insbesondere wenn das Magnetelement an die Hülse angespritzt ist oder mit der Hülse verklebt ist, bei im Betrieb auftretenden Temperaturschwankungen zu thermisch induzierten Spannungen in der Magneteinheit kommen, die ebenfalls zu einer Rissbildung im Magnetelement führen können.

Aus diesem Grund wird in der DE 10 2009 039 082 A1 vorgeschlagen, die Hülse und das Magnetelement zunächst separat herzustellen und anschließend formschlüssig miteinander zu verbinden statt miteinander zu verkleben, wobei die Hülse dazu einen buchsenförmigen Grundkörper mit einem sich radial nach außen erstreckenden Flansch aufweist, der in Umfangsrichtung verteilt mehrere Ausnehmungen aufweist. Das Magnetelement ist konzentrisch zur Hülse ausgebildet und außerhalb von dieser angeordnet und weist an einer Stirnseite mehrere, korrespondierend zu den Ausnehmungen ausgebildete Dome auf, welche sich durch die Ausnehmungen im Flansch der Hülse hindurcherstrecken und formschlüssig mit dem Flansch verbunden werden.

Es ist eine Aufgabe der Erfindung, eine alternative Magneteinheit bereitzustellen, vorzugsweise eine besonders einfach herzustellende Magneteinheit, insbesondere eine Magneteinheit, mit welcher die Gefahr der Rissbildung im Magnetelement infolge thermischer Spannungen reduziert werden kann, aber gleichzeitig in wenigstens einem Betriebszustand eine in tangentialer Richtung spielfreie, drehfeste Verbindung sichergestellt werden kann.

Diese Aufgabe wird erfindungsgemäß durch eine Magneteinheit, durch eine Sensoreinrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren und werden im Folgenden näher erläutert.

Eine erfindungsgemäße Magneteinheit für eine Sensoreinrichtung zum Erfassen einer einen Rotationszustand einer Lenkwelle eines Kraftfahrzeugs charakterisierenden Messgröße weist eine Hülse sowie ein mit der Hülse formschlüssig verbundenes Magnetelement auf, wobei die Hülse einen buchsenförmigen Befestigungsabschnitt zum Verbinden der Magneteinheit mit einem ersten Teil der Lenkwelle sowie einen sich in radialer Richtung nach außen erstreckenden Verbindungsflansch mit wenigstens einer Ausnehmung mit einer radialen Außenfläche zur Verbindung mit dem Magnetelement aufweist. Das Magnetelement einer erfindungsgemäßen Magneteinheit weist einen magnetisch wirksamen Magnetabschnitt sowie wenigstens ein sich in axialer Richtung erstreckendes Verbindungselement mit einer radialen Innenfläche zur Verbindung mit der Hülse auf.

Dabei erstreckt sich in einem funktionsgemäßen Verwendungszustand der Magneteinheit wenigstens ein Verbindungselement des Magnetelementes durch wenigstens eine Ausnehmung im Verbindungsflansch der Hülse hindurch und ist derart ausgebildet, dass das Verbindungselement des Magnetelementes mit dem Verbindungsflansch der Hülse in tangentialer Richtung und in axialer Richtung eine formschlüssige Verbindung bildet, wobei wenigstens ein Verbindungselement des Magnetelements zur Bildung des axialen Formschlusses mit dem Verbindungsflansch der Hülse wenigstens eine Hinterschneidung aufweist, wobei das Verbindungselement vorzugsweise hakenförmig und/oder T-förmig und/oder ankerförmig ausgebildet ist.

Erfindungsgemäß ist die Magneteinheit derart ausgebildet, dass in wenigstens einem Betriebszustand, vorzugsweise in einem Referenzzustand bei einer Referenzumgehungstemperatur, die radiale Innenfläche wenigstens eines Verbindungselementes in radialer Richtung beabstandet zu der radialen Außenfläche der zugehörigen Ausnehmung des Verbindungsflansches der Hülse angeordnet ist.

Als funktionsgemäßer Verwendungszustand der Magneteinheit wird im Sinne der Erfindung dabei ein Zustand verstanden, in welchem das Magnetelement in tangentialer Richtung und in axialer Richtung mit der Hülse formschlüssig verbunden ist.

Vorzugsweise ist wenigstens eine der Ausnehmungen im Verbindungsflansch dabei in radialer Richtung nach außen hin geöffnet ausgebildet, wobei besonders bevorzugt sämtliche Ausnehmungen als offene Ausnehmungen ausgebildet sind. In einigen Fällen kann es jedoch auch vorteilhaft sein, wenn wenigstens eine Ausnehmung als Langloch ausgebildet ist, insbesondere als ein in radialer Richtung orientiertes Langloch, wobei sich in diesem Fall, insbesondere in wenigstens einem Betriebszustand, vorzugsweise auch eine radiale Außenfläche des zugehörigen Verbindungselementes in radialer Richtung beabstandet zu einer radialen Innenfläche des Langlochs befindet, d.h. in wenigstens einem Betriebszustand, insbesondere im Referenzzustand, sowohl beabstandet zur inneren Lochkante als auch zur äußeren Lochkante angeordnet ist.

Durch die erfindungsgemäße, jeweils in radialer Richtung beabstandete Anordnung der radialen Innenfläche wenigstens eines Verbindungselementes, vorzugsweise sämtlicher Verbindungselemente, zur radialen Außenfläche der zugehörigen Ausnehmung im Verbindungsflansch der Hülse, kann sich das Magnetelement bei Temperaturänderungen in radialer Richtung zusammenziehen bzw. schrumpfen, ohne dabei durch die Hülse behindert zu werden. D.h., dadurch, dass die Verbindungselemente erfindungsgemäß in radialer Richtung nicht in der Ausnehmung anliegen, insbesondere nicht nach innen, kann ein nahezu ungehindertes Zusammenziehen bzw. Schrumpfen des Magnetelementes ermöglicht werden. Sind die Ausnehmungen im Verbindungsflansch der Hülse dabei in radialer Richtung nach außen geöffnet ausgebildet und/oder langlochförmig mit einem ausreichenden Abstand der äußeren Lochkante bzw. der radialen Innenfläche des Langlochs zum Verbindungselement, kann sich das Magnetelement bei Temperaturänderungen auch ungehindert ausdehnen.

Mit einer erfindungsgemäßen Magneteinheit kann somit auf besonders einfache Art und Weise das Entstehen thermisch bedingter Spannungen im Magnetelement, welche zur Bildung von Rissen im Magnetelement führen können, reduziert werden. Bei entsprechender Ausgestaltung von Hülse und Magnetelement, insbesondere bei entsprechend großem Abstand in radialer Richtung zwischen Verbindungselement und Ausnehmung kann das Entstehen thermisch bedingter Spannungen sogar nahezu weitestgehend verhindert werden.

In einer vorteilhaften Ausgestaltung einer erfindungsgemäßen Magneteinheit weist die Hülse wenigstens drei, insbesondere wenigstens vier, in Umfangsrichtung verteilt angeordnete Ausnehmungen auf, und das Magnetelement vorzugsweise wenigstens drei, insbesondere ebenfalls wenigstens vier, korrespondierend zu den Ausnehmungen verteilt angeordnete Verbindungselemente. Besonders bevorzugt sind die Ausnehmungen und/oder Verbindungselemente dabei gleichmäßig in Umfangsrichtung verteilt angeordnet. Durch die Mehrzahl der über den Umfang verteilt angeordneten, jeweils durch die Ausnehmungen und Verbindungselemente gebildeten formschlüssigen Verbindungen, kann eine laterale bzw. tangentiale Verschiebung zwischen Magnetelement und Hülse verhindert werden. Durch die gleichmäßige in Umfangsrichtung verteilte Anordnung der formschlüssigen Verbindungen kann eine gleichmäßige Kraftverteilung auf die einzelnen formschlüssigen Verbindungen erreicht werden.

In einer weiteren vorteilhaften Ausgestaltung einer erfindungsgemäßen Magneteinheit weisen die Hülse und das Magnetelement unterschiedlich thermische Ausdehnungskoeffizienten auf, wobei vorzugsweise der thermische Längen- und/oder Volumenausdehnungskoeffizient des Magnetelementes größer ist als der thermische Längen- und/oder Volumenausdehnungskoeffizient der Hülse. Dabei sind die Hülse und das Magnetelement bevorzugt derart ausgebildet, dass wenigstens eine formschlüssige Verbindung zwischen dem Magnetelement und der Hülse in einem Referenzzustand bei einer Referenzumgebungstemperatur in tangentialer und/oder axialer Richtung spielfrei ist.

Die Referenzumgebungstemperatur, bei welcher die formschlüssige Verbindung zwischen Magnetelement und Hülse in tangentialer und/oder axialer Richtung vorzugsweise spielfrei ist, liegt bevorzugt in einem Temperaturbereich von 15°C bis 30°C, insbesondere zwischen 20°C und 25°C und beträgt vorzugsweise 20° C oder 23°C.

Die Hülse einer erfindungsgemäßen Magneteinheit enthält vorzugsweise Metall und/oder ist aus Metall hergestellt, wobei die Hülse vorzugsweise durch Tiefziehen hergestellt ist. Vorzugsweise ist die Hülse derart ausgebildet, dass sie mittels einer Presspassung auf einem Teil der Lenkwelle befestigt werden kann oder mit dem Teil der Lenkwelle verschweißt werden kann. Alternativ kann die Hülse auch mit dem Teil der Lenkwelle verstemmt oder verklebt werden, wobei sich jedoch eine Verbindung mit der Lenkwelle mittels einer Presspassung oder einer Schweißverbindung als besonders vorteilhaft herausgestellt hat.

Der Magnetabschnitt des Magnetelementes ist vorzugsweise ebenfalls hülsen- oder ringförmig ausgebildet, insbesondere in Umfangsrichtung geschlossen, oder derart ausgebildet, dass er ähnlich wie ein hülsen- oder ringförmig ausgebildeter Magnetabschnitt bzw. wie ein üblicher, aus dem Stand der Technik bekannter Ringmagnet wirkt, wobei der Magnetabschnitt bevorzugt konzentrisch zur Hülse angeordnet ist.

Das Magnetelement einer erfindungsgemäßen Magneteinheit enthält bevorzugt ein mit magnetischen Partikeln gefüllten Kunststoff und/oder besteht daraus, wobei das Magnetelement vorzugsweise in einem Kunststoffspritzgießverfahren hergestellt ist. Besonders bevorzugt ist das Magnetelement dabei durch Anspritzen an die Hülse und/oder durch Umspritzen der Hülse hergestellt worden und auf diese Weise mit der Hülse verbunden worden.

Alternativ zur Befestigung des Magnetelementes durch Anspritzen an die Hülse und/oder Umspritzen der Hülse kann das Magnetelement auch zunächst separat von der Hülse hergestellt werden und anschließend formschlüssig mit der Hülse verbunden werden, wobei das Magnetelement auch in diesem Fall vorzugsweise im Kunststoffspritzgießverfahren hergestellt wird. Dabei wird das Magnetelement vorzugsweise allerdings zunächst mit Verbindungselementen hergestellt, welche domartig ausgebildet sind und noch keine Hinterschneidung aufweisen, so dass die Verbindungselemente durch axiales Verlagern des Magnetelementes relativ zur Hülse in die zugehörigen Ausnehmungen im Verbindungsflansch der Hülse eingeführt bzw. durch die Ausnehmungen hindurchgeführt werden können.

Bevorzugt sind die Verbindungselemente dabei derart ausgebildet, dass sie, insbesondere nach dem Einführen bzw. Hindurchführen durch die Ausnehmungen im Verbindungsflansch der Hülse, derart umgeformt werden können, dass die zur Herstellung des axialen Formschlusses erforderlichen Hinterschneidungen entstehen. Dabei sind die Verbindungselemente vorzugsweise dazu ausgebildet, mittels Verstemmen, Heißverstemmen oder Ultraschallverstemmen entsprechend umgeformt zu werden, insbesondere derart, dass die dabei entstehenden formschlüssigen Verbindungen zwischen Magnetelement und Hülse in tangentialer Richtung und/oder in axialer Richtung im Referenzzustand spielfrei sind.

Das Umformen von Kunststoff-Verbindungselementen mittels Verstemmen, insbesondere Heißverstemmen oder Ultraschallverstemmen ist aus dem Stand der Technik allgemein bekannt, so dass an dieser Stelle auf weitere Ausführungen diesbezüglich verzichtet wird.

Eine erfindungsgemäße Sensoreinrichtung zum Erfassen einer einen Rotationszustand einer Lenkwelle eines Kraftfahrzeugs charakterisierenden Messgröße weist eine erfindungsgemäße Magneteinheit auf.

Ein erfindungsgemäßes Kraftfahrzeug mit einer Sensoreinrichtung weist eine erfindungsgemäße Sensoreinrichtung mit einer erfindungsgemäßen Magneteinheit auf.

Die mit Bezug auf die Magneteinheit vorgestellten vorteilhaften Ausgestaltungen und deren Vorteile gelten entsprechend auch für eine erfindungsgemäße Sensoreinrichtung sowie für ein erfindungsgemäßes Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgenden in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines vorteilhaften Ausführungsbeispiels unter Bezugnahme auf die beigefügten Zeichnungen näher erläutert.

Es zeigen:
- Fig. 1: ein erstes Ausführungsbeispiel einer erfindungsgemäßen Magneteinheit in perspektivischer Darstellung,
- Fig. 2: einen Längsschnitt durch die erfindungsgemäße Magneteinheit aus Fig. 1,
- Fig. 3: die erfindungsgemäße Magneteinheit aus den Fig. 1 und 2 im Querschnitt im Bereich der formschlüssigen Verbindung zwischen Hülse und Magnetelement,
- Fig. 4: die erfindungsgemäße Magneteinheit aus den Fig. 1 bis 3 vor dem formschlüssigen Verbinden von Hülse und Magnetelement und
- Fig. 5: die Hülse der erfindungsgemäßen Magneteinheit aus den Fig. 1 bis 4 in perspektivischer Einzelteildarstellung.

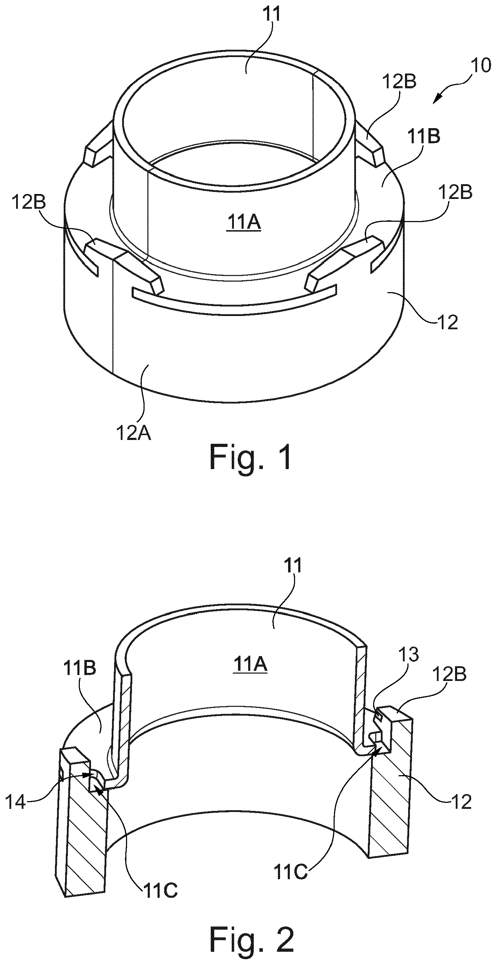

Fig. 1 zeigt ein erstes Ausführungsbeispiel einer erfindungsgemäßen Magneteinheit 10 mit einer Hülse 11 und einem Magnetelement 12, wobei die Hülse 11 einen buchsenförmigen Befestigungsabschnitt 11A zum Befestigen der Magneteinheit auf einem ersten Teil einer hier nicht dargestellten Lenkwelle aufweist sowie einen sich in radialer Richtung nach außen erstreckenden Verbindungsflansch 11B zum Verbinden der Hülse 11 mit dem Magnetelement 12.

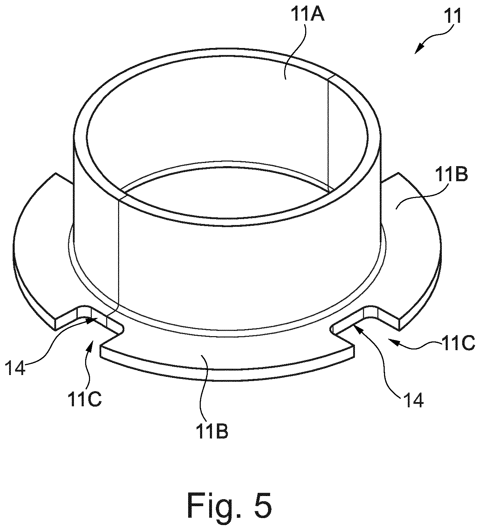

Das Magnetelement 12 der erfindungsgemäßen Magneteinheit 10 weist einen wirksamen Magnetabschnitt 12A auf, der ebenfalls buchsen- bzw. hülsenförmig ausgebildet ist, sowie in diesem Fall vier, in Umfangsrichtung gleichmäßig verteilt angeordnete Verbindungselemente 12B. Die Hülse 11 weist in ihrem Verbindungsflansch 11B entsprechend vier, ebenfalls in Umfangsrichtung gleichmäßig verteilt angeordnete Ausnehmungen 11C auf, siehe auch Fig. 2 bis 5, durch welche die Verbindungselemente 12B des Magnetelementes 12 jeweils in axialer Richtung hindurchgeführt sind.

Die Verbindungselemente 12B sind dabei derart ausgebildet, dass sie mit dem Verbindungsflansch 11B der Hülse 11 sowohl eine formschlüssige Verbindung in tangentialer Richtung bilden als auch in axialer Richtung, wobei die Verbindungselemente 12B dazu jeweils T-förmig bzw. ankerförmig ausgebildet sind und entsprechende Hinterschneidungen aufweisen.

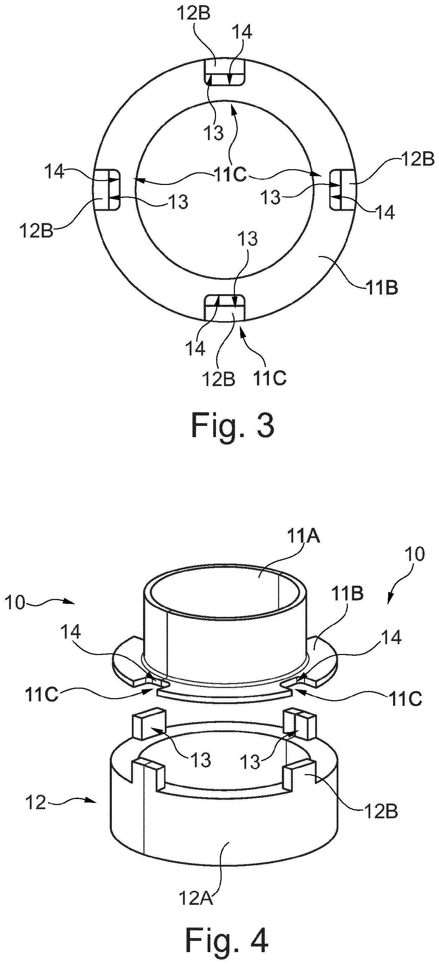

Erfindungsgemäß sind die Verbindungselemente 12B dabei derart ausgebildet, dass sie mit ihren radialen Innenflächen 13 in radialer Richtung beabstandet zu den radialen Außenflächen 14 der zugehörigen Ausnehmungen 11C angeordnet sind, so dass sich das Magnetelement bei Temperaturschwankungen ungehindert in radialer Richtung nach innen zusammenziehen kann, d.h. ungehindert schrumpfen kann. Dadurch, dass die Ausnehmungen 11C in radialer Richtung nach außen offen ausgebildet sind, kann sich das Magnetelement 12 außerdem ungehindert in radialer Richtung nach außen ausdehnen. Die beabstandete Anordnung der Verbindungselemente 12B, insbesondere der Abstand zwischen den radialen Innenflächen 13 der Verbindungselemente 12B und den radialen Außenflächen der Ausnehmungen 11C, ist besonders gut in Fig. 3 erkennbar.

Bei diesem Ausführungsbeispiel einer erfindungsgemäßen Magneteinheit 10 sind die formschlüssigen Verbindungen zwischen den Verbindungselementen 12B und dem Verbindungsflansch 11B der Hülse 11 ferner derart ausgestaltet, dass sie in einem Referenzzustand bei einer Referenzumgebungstemperatur von 20°C sowohl in tangentialer Richtung als auch in axialer Richtung spielfrei sind.

Zur Herstellung der beschriebenen, erfindungsgemäßen Magneteinheit 10 sind zunächst die Hülse 11 sowie das Magnetelement 12 jeweils separat hergestellt worden, siehe Fig. 4, wobei die Verbindungselemente 12B des Magnetelementes 12 dabei zunächst als domartige bzw. stegförmig ausgebildete Verbindungselemente ohne Hinterschneidungen, wie das gesamte Magnetelement, im Kunststoffspritzgießverfahren hergestellt worden sind. Anschließend wurden die Hülse 11 und das Magnetelement 12 in axialer Richtung zusammengefügt, wobei dabei die Verbindungselemente 12B in die Ausnehmungen 11C der Hülse 11 eingeführt bzw. durch die Ausnehmungen hindurchgesteckt worden sind. In einem weiteren Schritt sind die Verbindungselemente 12B mittels eines Umformverfahrens, insbesondere durch Heißverstemmen, derart umgeformt worden, dass die T-förmige bzw. ankerförmige, in den Figuren 1 und 2 gut erkennbare Gestalt der Verbindungselemente 12B mit den jeweils den axialen Formschluss bildenden Hinterschneidungen entstanden ist.

Alternativ ist es selbstverständlich möglich, zur Herstellung einer erfindungsgemäßen Magneteinheit 10, das Magnetelement an die Hülse anzuspritzen, wobei dazu das entsprechende Spritzgießwerkzeug derart ausgestaltet sein sollte, dass die radialen Innenflächen der Verbindungselemente jeweils nicht bis an die radialen Außenflächen der zugehörigen Ausnehmungen heranreichen, sondern erfindungsgemäß mit einem Abstand in radialer Richtung zu diesen angespritzt werden, damit die ungehinderte radiale Schrumpfung des Magnetelementes gegenüber der Hülse ermöglicht wird, so dass das Entstehen thermisch induzierter Spannungen im Magnetelement vermieden werden kann bzw. die Gefahr der Entstehung thermisch induzierter Spannungen im Magnetelement deutlich reduziert werden kann.

Selbstverständlich ist Vielzahl konstruktiver Abwandlungen zu dem erläuterten Ausführungsbeispiel möglich, ohne den Inhalt der Patentansprüche zu verlassen.

### Bezugszeichenliste:

- 10: erfindungsgemäße Magneteinheit
- 11: Hülse
- 11A: buchsenförmiger Befestigungsabschnitt
- 11B: Verbindungsflansch
- 11C: Ausnehmung
- 12: Magnetelement
- 12A: wirksamer Magnetabschnitt
- 12B: Verbindungselement
- 13: radiale Innenfläche des Verbindungselementes
- 14: radiale Außenfläche der Ausnehmung

## Patentansprüche

1. Magneteinheit (10) für eine Sensoreinrichtung zum Erfassen einer einen Rotationszustand einer Lenkwelle eines Kraftfahrzeugs charakterisierenden Messgröße,
- wobei die Magneteinheit (10) eine Hülse (11) sowie ein mit der Hülse (11) formschlüssig verbundenes Magnetelement (12) aufweist,
- wobei die Hülse einen buchsenförmigen Befestigungsabschnitt (11A) zum Verbinden der Magneteinheit (10) mit einem ersten Teil der Lenkwelle sowie einen sich in radialer Richtung nach außen erstreckenden Verbindungsflansch (11B) mit wenigstens einer Ausnehmung (11C) mit einer radialen Außenfläche (14) zur Verbindung mit dem Magnetelement (12) aufweist,
- wobei das Magnetelement (12) einen magnetisch wirksamen Magnetabschnitt (12A) sowie wenigstens ein sich in axialer Richtung erstreckendes Verbindungselement (12B) mit einer radialen Innenfläche (13) zur Verbindung mit der Hülse (11) aufweist,
- wobei wenigstens ein Verbindungselement (12B) des Magnetelementes (12) sich durch wenigstens eine Ausnehmung (11C) im Verbindungsflansch (11B) der Hülse (11) hindurcherstreckt und derart ausgebildet ist, dass das Verbindungselement (12B) des Magnetelementes (12) mit dem Verbindungsflansch (11B) der Hülse (11) in tangentialer Richtung und in axialer Richtung eine formschlüssige Verbindung bildet,
- wobei wenigstens ein Verbindungselement (12B) des Magnetelements (12) zur Bildung des axialen Formschlusses mit dem Verbindungsflansch (11B) der Hülse (11) wenigstens eine Hinterschneidung aufweist, wobei das Verbindungselement (12B) vorzugsweise hakenförmig und/oder T-förmig und/oder ankerförmig ausgebildet ist,
**dadurch gekennzeichnet, dass** die Magneteinheit (10) derart ausgebildet ist, dass in wenigstens einem Betriebszustand, vorzugsweise in einem Referenzzustand bei einer Referenzumgebungstemperatur, die radiale Innenfläche (13) wenigstens eines Verbindungselements (12B) in radialer Richtung beabstandet zu der radialen Außenfläche (14) der zugehörigen Ausnehmung (11C) des Verbindungsflansches (11B) der Hülse (11) angeordnet ist.

2. Magneteinheit (10) nach Anspruch 1, **dadurch gekennzeichnet, dass** die Hülse (11) wenigstens drei, insbesondere wenigstens vier, in Umfangsrichtung verteilt angeordnete Ausnehmungen (11C) aufweist, wobei das Magnetelement (12) vorzugsweise wenigstens drei, insbesondere wenigstens vier, korrespondierend zu den Ausnehmungen (11C) verteilt angeordnete Verbindungselemente (12B) aufweist.

3. Magneteinheit (10) nach Anspruch 1 oder 2, **dadurch gekennzeichnet, dass** die Hülse (11) und das Magnetelement (12) unterschiedliche thermische Ausdehnungskoeffizienten aufweisen, wobei vorzugsweise der thermische Längen- und/oder Volumenausdehnungskoeffizient des Magnetelementes (12) größer ist als der thermische Längen- und/oder Volumenausdehnungskoeffizient der Hülse (11), und wobei insbesondere die Hülse (11) und das Magnetelement (12) derart ausgebildet sind, dass wenigstens eine formschlüssige Verbindung zwischen Hülse (11) und Magnetelement (12) in einem Referenzzustand bei einer Referenzumgebungstemperatur in tangentialer und/oder axialer Richtung spielfrei ist.

4. Sensoreinrichtung zum Erfassen einer einen Rotationszustand einer Lenkwelle eines Kraftfahrzeugs charakterisierenden Messgröße, **dadurch gekennzeichnet, dass** die Sensoreinrichtung eine Magneteinheit (10) nach einem der Ansprüche 1 bis 3 aufweist.

5. Kraftfahrzeug mit einer Sensoreinrichtung, **dadurch gekennzeichnet, dass** die Sensoreinrichtung nach Anspruch 4 ausgebildet ist.

## Claims

1. Magnet unit (10) for a sensor device for acquiring a measured variable that characterizes a rotational state of a steering shaft of a motor vehicle,
- wherein the magnet unit (10) comprises a sleeve (11) and a magnet element (12) that is connected in a positive-locking manner to the sleeve (11),
- wherein the sleeve comprises a bush-shaped attaching section (11A) for connecting the magnet unit (10) to a first part of the steering shaft and a connecting flange (11B) that extends outwards in the radial direction and comprises at least one cut-out (11C) having a radial outer face (14) for connecting to the magnet element (12),
- wherein the magnet element (12) comprises a magnetically-effective magnet section (12A) and also at least one connecting element (12B) that extends in the axial direction and comprises a radial inner face (13) for connecting to the sleeve (11),
- wherein at least one connecting element (12B) of the magnet element (12) extends through at least one cut-out (11C) in the connecting flange (11B) of the sleeve (11) and is configured in such a manner that the connecting element (12B) of the magnet element (12) forms a positive-locking connection in the tangential direction and in the axial direction with the connecting flange (11B) of the sleeve (11),
- wherein at least one connecting element (12B) of the magnet element (12) comprises at least one undercut so as to form the axial positive-locking connection with the connecting flange (11B) of the sleeve (11), wherein the connecting element (12B) is preferably configured in a hook-shaped and/or T-shaped and/or anchor-shaped manner, **characterized in that** the magnet unit (10) is configured in such a manner that in at least one operating state, preferably in a reference state in the case of a reference ambient temperature, the radial inner face (13) at least of one connecting element (12B) is spaced in the radial direction with respect to the radial outer face (14) of the associated cut-out (11C) of the connecting flange (11B) of the sleeve (11).

2. Magnet unit (10) according to Claim 1, **characterized in that** the sleeve (11) comprises at least three, in particular at least four, cut-outs (11C) that are arranged distributed in the peripheral direction, wherein the magnet element (12) comprises preferably at least three, in particular at least four, connecting elements (12B) that are arranged distributed in a corresponding manner to the cut-outs (11C).

3. Magnet unit (10) according to Claim 1 or 2, **characterized in that** the sleeve (11) and the magnet element (12) have different coefficients of thermal expansion, wherein preferably the length and/or volume of the coefficient of thermal expansion of the magnet element (12) are/is greater than the length and/or volume of the coefficient of thermal expansion of the sleeve (11), and wherein in particular the sleeve (11) and the magnet element (12) are configured in such a manner that at least one positive-locking connection between the sleeve (11) and the magnet element (12) in a reference state in the case of a reference ambient temperature is free of play in the tangential and/or axial direction.

4. Sensor device for acquiring a measured variable that characterizes a rotational state of a steering shaft of a motor vehicle, **characterized in that** the sensor device comprises a magnet unit (10) according to any one of Claims 1 to 3.

5. Motor vehicle having a sensor device, **characterized in that** the sensor device is configured according to Claim 4.

## Revendications

1. Unité magnétique (10) pour un dispositif capteur permettant de détecter une grandeur de mesure caractérisant un état de rotation d'un arbre de direction d'un véhicule automobile,
- l'unité magnétique (10) présentant un manchon (11) ainsi qu'un élément magnétique (12) relié au manchon (11) par complémentarité de forme,
- le manchon présentant une section de fixation (11A) en forme de douille pour relier l'unité magnétique (10) à une première partie de l'arbre de direction, ainsi qu'une bride de raccordement (11B) s'étendant vers l'extérieur dans la direction radiale, dotée d'au moins un évidement (11C) ayant une surface extérieure radiale (14) pour le raccordement à l'élément magnétique (12),
- l'élément magnétique (12) présentant une section magnétique (12A) à effet magnétique ainsi qu'au moins un élément de raccordement (12B) s'étendant dans la direction axiale et doté d'une surface intérieure radiale (13) pour le raccordement au manchon (11),
- dans lequel au moins un élément de raccordement (12B) de l'élément magnétique (12) s'étend à travers au moins un évidement (11C) dans la bride de raccordement (11B) du manchon (11) et est réalisé de telle sorte que l'élément de raccordement (12B) de l'élément magnétique (12) constitue avec la bride de raccordement (11B) du manchon (11) dans la direction tangentielle et dans la direction axiale un raccordement par complémentarité de forme,
- au moins un élément de raccordement (12B) de l'élément magnétique (12) présentant au moins une contre-dépouille pour former la complémentarité de forme axiale avec la bride de raccordement (11B) du manchon (11), l'élément de raccordement (12B) étant de préférence réalisé en forme de crochet et/ou en forme de T et/ou en forme d'ancre,
**caractérisée en ce que** l'unité magnétique (10) est réalisée de telle sorte que dans au moins un état de fonctionnement, de préférence dans un état de référence à une température ambiante de référence, la surface intérieure radiale (13) d'au moins un élément de raccordement (12B) est disposée dans la direction radiale à distance de la surface extérieure radiale (14) de l'évidement associé (11C) de la bride de raccordement (11B) du manchon (11).

2. Unité magnétique (10) selon la revendication 1, **caractérisée en ce que** le manchon (11) présente au moins trois, en particulier au moins quatre, évidements (11C) répartis dans la direction circonférentielle, l'élément magnétique (12) présentant de préférence au moins trois, en particulier au moins quatre, éléments de raccordement (12B) répartis de manière correspondante aux évidements (11C).

3. Unité magnétique (10) selon la revendication 1 ou 2, **caractérisée en ce que** le manchon (11) et l'élément magnétique (12) présentent des coefficients de dilatation thermique différents, dans laquelle de préférence le coefficient de dilatation thermique en longueur et/ou en volume de l'élément magnétique (12) est supérieur au coefficient de dilatation thermique en longueur et/ou en volume du manchon (11), et dans laquelle en particulier le manchon (11) et l'élément magnétique (12) sont réalisés de telle sorte qu'au moins un raccordement par complémentarité de forme entre le manchon (11) et l'élément magnétique (12) dans un état de référence à une température ambiante de référence est sans jeu dans la direction tangentielle et/ou axiale.

4. Dispositif capteur permettant de détecter une grandeur de mesure caractérisant un état de rotation d'un arbre de direction d'un véhicule automobile, **caractérisé en ce que** le dispositif capteur présente une unité magnétique (10) selon l'une quelconque des revendications 1 à 3.

5. Véhicule automobile comprenant un dispositif capteur, **caractérisé en ce que** le dispositif capteur est réalisé selon la revendication 4.
